Europäisches Patentamt

European Patent Office

Office européen des brevets

(11) Veröffentlichungsnummer: **0 148 150**

**A1**

(12) # EUROPÄISCHE PATENTANMELDUNG

(21) Anmeldenummer: 84890181.5

(51) Int. Cl.⁴: **G 01 N 27/30**

(22) Anmeldetag: 02.10.84

(30) Priorität: 08.11.83 AT 3937/83

(43) Veröffentlichungstag der Anmeldung:
10.07.85 Patentblatt 85/28

(84) Benannte Vertragsstaaten:
DE FR GB

(71) Anmelder: AVL AG
Grabenstrasse 11
CH-8201 Schaffhausen(CH)

(72) Erfinder: Ritter, Christoph, Dr.
Radegunderstrasse 69
A-8045 Graz(AT)

(72) Erfinder: Gahramani, Massoud, Dr.
Ragnitzstrasse 139
A-8047 Graz(AT)

(72) Erfinder: Marsoner, Hermann, Dipl.-Ing. Dr.
Roseggersiedung 2
A-8153 Steinberg(AT)

(74) Vertreter: Krause, Walter, Dr. Dipl.-Ing.
Margaretenstrasse 21
A-1040 Wien(AT)

(54) Verfahren zur Herstellung bzw. Regenerierung einer Siliconpolymer Membran sowie ionensensitive Durchfluss-Membranelekrode mit einer derartigen Membran.

(57) Eine in auspolymerisierter Form vorliegende Siliconpolymer-Membran wird mit einem eine elektroaktive Komponente enthaltenden Lösungsmittel in Kontakt gebracht. Dabei kommt es zu einer Quellung der Siliconpolymer-Membran, wodurch auch hochmolekulare elektroaktive Komponenten in die Membrane eindringen können und dort nach dem Verdunsten des Lösungsmittels enthalten bleiben. Auf gleiche Weise kann auch eine Regenerierung derartiger Membran-Elektroden durch neue Beladung mit elektroaktiver Komponente durchgeführt werden.

EP 0 148 150 A1

Croydon Printing Company Ltd

- 1 -

Verfahren zur Herstellung und Regenerierung einer
Siliconpolymer-Membran sowie ionensensitive Durch-
fluß-Membranelektrode mit einer derartigen Membran

Die Erfindung betrifft ein Verfahren zur Herstellung
einer eine elektroaktive Komponente enthaltenden Siliconpolymer-Membran zur Verwendung in einer ionensensitiven Membranelektrode zur Messung der Ionenkonzentration
in einer Probe.

Es ist aus der einschlägigen Literatur eine Reihe von
verschiedenartigen Typen von ionensensitiven Elektroden
bekannt geworden. Eine Zusammenfassung von verschiedenen
Typen und Ausführungsformen von ionensensitiven Elektroden ist z.B. in dem Buch von Karl Cammann "Das Arbeiten
mit ionenselektiven Elektroden", 2. Auflage, 1977, enthalten. Dort ist auch ein Verfahren zur Herstellung von
ionensensitiven, eine elektroaktive Komponente enthaltenden PVC-Membranen beschrieben. Bei der Herstellung dieser
Membranen wird eine elektroaktive Komponente, die ein
flüssiger Ionenaustauscher oder ein neutraler Carrier
oder eine sonstige für diesen Zweck bekannte elektroaktive
Komponente sein kann, gemeinsam mit PVC und einer geeigneten Weichmachersubstanz in einem Lösungsmittel, vorzugsweise Tetrahydrofuran, gelöst. Die Lösung wird in
einem Glasring auf einer Glasplatte ausgegossen und man
erhält nach Verdunsten des Lösungsmittels eine Membran
in einer Stärke von einigen Zehntel Millimeter, die als
ionensensitive Membran wirkt. Ein Stück dieser Membran kann in einen Elektrodenkörper eingespannt werden, wie er beispielsweise aus der DE-OS 20 21 318 bekannt ist. Darüberhinaus ist eine Reihe von anderen Verfahrensweisen zur Anwendung derartiger PVC-Membranen bekannt geworden. So zeigt z.B. die AT-PS 363 263 eine Anordnung von ionenselektiven Elektroden, wo eine derartige, in flüssiger Form als Lösung vorliegende, PVC-Membran in eine Öffnung einer axialen Bohrung eines zylindrischen Elektrodenkörpers eingegossen ist und dadurch eine Durchflußelektrode bildet. In etwas anderer Weise beschreibt z.B. die DE-PS 29 28 884 eine ionensensitive Elektrode, bei der ein Stück eines PVC-Rohres ausgeschnitten ist, sodaß an dieser Stelle eine Öffnung entsteht, in welche eine geringe Menge der Lösung von PVC und der elektroaktiven Komponente eingegossen wird.

PVC-Elektroden sind insbesondere für Laboratoriumsanwendungen sehr bequem herstellbar und bedeuteten bei ihrer Einführung einen wesentlichen Fortschritt in der Technologie der ionensensitiven Elektrode. Allerdings haften der PVC-Membran als elektroaktive Membran einer ionensensitiven Elektrode auch eine Reihe von Nachteilen an. So hat sich bei der Massenfertigung gezeigt, daß Probleme auftreten, wenn der im allgemeinen aus einem Polymer bestehende Elektrodenkörper, der die Membran trägt, sich nicht in ausreichender Weise mit der PVC-Membran verbindet, oder diese aus elektrischen und funktionellen Gründen Komponenten enthält, die mit dem Elektrodenkörpermaterial nicht kompatibel sind. Bei der Verwendung von PVC als Elektrodenkörpermaterial hat sich weiters gezeigt, daß die elektroaktiven und sonstigen Membrankomponenten die Tendenz zeigen, aus der Membran in Richtung Elektrodenkörper abzuwandern, was eine Verarmung an elektroaktivem Membranmaterial und Weichmachermaterial in den Membranen hervorgerufen hat und zu einem Funktionsverlust der ionensensitiven Elektrode führt. Weiters hat sich gezeigt, daß im Kontakt z.B. mit biologischen Flüssigkeiten Wechselwirkungen auftreten zwischen der PVC-Membran und deren Komponenten einerseits und den Inhaltsstoffen der biologischen Flüssigkeiten andererseits. Hier ist insbesondere die Wirkung großer lipophiler Anionen, wie der Proteine sowie Anioneninterferenz von Sulphat, Phospat und dergleichen zu nennen, die insbesondere die Messung von unverdünntem Harn mit PVC-Elektroden erschweren.

Weiters ist in einer Veröffentlichung von J. Pick et al: Anal.Chemica Acta 64, 1973, p. 477, eine kaliumselektive, ionensensitive Elektrode beschrieben, die als elektroaktives Material Valinomycin enthält, allerdings nicht in einer PVC-Matrix als Membran, sondern in einer Silicongummimembran. Die Verwendung von Silicongummi ist bereits aus früherer Literatur bekannt, wo Silicongummi als gebräuchliches Material zur Herstellung von sogenannten heterogenen Festkörpermembranelektroden angeführt war. Diese heterogenen Festkörpermembranelektroden bestehen aus im allgemeinen einem festen pulverförmigen und weitestgehend in den Probenbestandteilen der zu messenden Probe unlöslichen Material, das in einer Trägermatrix enthalten ist. Diese als Kit für die elektroaktiven Partikeln fungierende Trägermasse kann aus Silicongummimaterial bestehen. Dadurch wurde die Herstellung derartiger Membranelektroden relativ einfach. Es war lediglich erforderlich, ein fein gekörntes Pulver der unlöslichen elektroaktiven Komponente in ein Silicongummimonomer oder -praepolymer einzuführen und diese Substanz sodann nach bekannten Verfahrensvorschriften zu polymerisieren. Die Polymerisation konnte als Block erfolgen oder in dünner Schicht, bzw. auch als Überzug auf bekannten Trägeranordnungen für ionensensitive Elektroden. Während die heterogenen Festkörperelektroden wenig Eingang in die praktische Verwendung gefunden haben, konzentriert sich insbesondere bei der Verwendung von ionensensitiven Elektroden zur Messung von Probenbestandteilen biologischer Flüssigkeiten das Interesse auf die vorhin erwähnten Flüssigkeitsmembranelektroden mit neutralen Carriern, geladenen Ligandmolekülen oder Ionenaustauschern in flüssiger Form als elektroaktive Komponente in einer Membran. Wie bereits erwähnt, können diese elektroaktiven Komponenten nicht nur

- 4 -                    0148150

in PVC-Matrices eingebaut werden, sondern auch in andere
Polymere. Während sich Polymethylmetacrylate oder Polyvinylidenfluoride als für diesen Zweck wenig geeignet
erwiesen haben, kommt der Verwendung von Siliconpolymeren
ein erhöhtes Interesse zu, da dieses Material nicht nur
leicht verwendbar und polymerisierbar ist, sondern es
sich auch gezeigt hat, daß es als Matrixmaterial die Eigenschaften einer ionensensitiven Elektrode in Bezug auf Selektivität und Störinterferenzen günstig beeinflussen kann.

Dies wurde beispielsweise in einem Artikel von P. Anker
et al: "Potentiometry of Na$^+$ in undiluted serum and urine
with use of an improved neutral carrier-based solvent
polymeric membrane electrode"; in Clin.Chem.Bd. 29, Nr.4
(1983), beschrieben.

Zur Herstellung derartiger ionensensitiver Membranelektroden und Membranen wird die elektroaktive Komponente
ähnlich wie bei der Herstellung einer PVC-Membran, in ein
an sich bekanntes Siliconpolymer eingemischt und dieses
sodann in der gewünschten Form zur Polymerisation gebracht. Die dadurch entstehenden elektroaktiven Membranen
weisen, gemäß der bekannten Literatur, günstige Eigenschaften auf. Sie haben jedoch auch einen sehr wesentlichen Nachteil, dessentwegen die Anwendbarkeit eingeschränkt ist. Der elektrische Widerstand derartiger Membranen ist auch bei einem hohen Gehalt an elektroaktiver
Komponente extrem hoch. In der Literatur beschriebene
Membranwiderstände liegen über 10 Giga Ohm und sind daher
außer für Laboranwendungen in der Praxis nur schwer handhabbar. Insbesondere, wenn die aktiven Membranoberfläche
aus Gründen der Geometrie oder des vorhandenen Probenvolumens klein ausgeführt werden muß.

Aufgabe der vorliegenden Erfindung ist es, die angeführten
Nachteile der bekannten ionensensitiven Membranelektroden
zu vermeiden und insbesonders ein Verfahren zur Herstellung einer in einer derartigen Membranelektrode verwendbaren Siliconpolymer-Membran anzugeben, welches eine
gut haltbare Membran mit niedrigem Membranwiderstand, rascher Ansprechzeit, guten Selektivitätseigenschaften und Anwendbarkeit bei biologischen Flüssigkeiten mit verschiedensten elektroaktiven Komponenten ergibt.

Dies wird gemäß der Erfindung dadurch erreicht, daß eine Lösung der elektroaktiven Komponente in einem zu einer Quellung des polymerisierten Siliconpolymers führenden Lösungsmittel mit der in auspolymerisierter Form vorliegenden Siliconpolymer-Membran in Kontakt gebracht wird und daß anschließend das Lösungsmittel verdunstet wird.

Völlig überraschend und unerwartet wurde beobachtet, daß auch hochmolekulare elektroaktive Komponenten sehr leicht in ein fertig auspolymerisiertes Siliconmaterial eindringen können, wenn eine Lösung dieser elektroaktiven Komponente in einem vorzugsweise organischen Lösungsmittel mit dem Siliconpolymer in Kontakt gebracht wird, vorausgesetzt nur, daß das Lösungsmittel der elektroaktiven Komponente die Fähigkeit aufweist, zu einer Quellung des auspolymerisierten Siliconpolymers zu führen. Unter Quellung soll in diesem Zusammenhang die Eigenschaft des Siliconpolymers verstanden werden, im Kontakt mit dem Lösungsmittel mit einer scheinbaren Volumszunahme zu reagieren, die wahrscheinlich auf die Aufnahme von Lösungsmittel in die Polymerphase zurückzuführen ist. Durch die Quellung bzw. das Eindringen der Lösungsmittelmoleküle in die Polymerstruktur des Siliconpolymermaterials kommt es zu dem bisher nicht bekannten Effekt, daß auch hochmolekulare elektroaktive Materialien, wie beispielsweise Valinomycin, in das Siliconpolymer eindringen können. Es hat sich gezeigt, daß nach Verdunsten des Lösungsmittels die elektroaktive Komponente in dem Siliconpolymer enthalten bleibt und durch wäßrige sowie auch eiweißhaltige Probenmaterialien nicht bzw. nur in vernachlässigbarem Ausmaß, wieder aus dem Siliconpolymer entfernt wird.

Dadurch kann eine ionensensitive Membranelektrode hergestellt werden, die weiters die überraschende Eigenschaft zeigt, daß der Membranwiderstand um nahezu zwei Zehnerpotenzen niedriger ist als derjenige vergleichbarer Elektroden, die nach dem genannten bekannten Verfahren hergestellt sind, bei dem die elektroaktive Komponente vor der Polymerisation in das Siliconmaterial eingebracht wird und dieses sodann in die gewünschte Form polymerisiert wird. Es hat sich gezeigt, daß damit auf technologisch sehr einfache Art und Weise gut brauchbare und sehr gut haltbare ionensensitive Elektroden mit verschiedenen elektroaktiven Komponenten hergestellt werden können, und diese völlig gleichmäßige Resultate, niederen Membranwiderstand, rasche Ansprechzeit, gute Selektivitätseigenschaften und Anwendbarkeit bei biologischen Flüssigkeiten zeigten.

Das erfindungsgemäße Verfahren ist im Zusammenhang mit jeder beliebigen Membranform anwendbar, vorausgesetzt, daß sie sich mit einem auf Silicon basierenden Polymermaterial herstellen läßt. Insbesonders hat es sich als außerordentlich günstig erwiesen, ionensensitive Durchfluß-Membranelektroden so herzustellen, daß die Membran als Siliconschlauch ausgebildet ist, der an seinen Enden in einem Elektrodenkörper eingeklebt ist und an seiner freien Außenoberfläche mit einem in einem Innenraum des Elektrodenkörpers vorgesehenen Elektrolyten, der seinerseits mit einer Ableitelektrode in Verbindung steht, in Kontakt ist.

Ein Siliconschlauch der gewünschten lichten Weite und Länge wird dabei beispielsweise durch Einlegen in eine Lösung der elektroaktiven Komponente in einem quellenden Lösungsmittel aktiviert und das Lösungsmittel nach einigen Minuten wieder verdunstet. Ein Stück eines derartigen Schlauches wird sodann axial in einen Elektrodenkörper eingeklebt und fungiert als Membran der ionensensitiven Elektrode.

Es sind verschiedenartige Siliconpolymere bekannt, die sich durch die Art und Weise ihrer Polymerisation und auch in ihrem Chemismus unterscheiden. Das Grundgerüst der Silicone besteht aus einer alternierenden Kette aus Silicium- und Sauerstoffatomen, wobei an den Siliciumatomen zwei freie Valenzen zur Aufnahme eines organischen Radikals vorhanden sind. Dieses organische Radikal bestimmt weitestgehend die Eigenschaften, wie Polymerisierbarkeit, Quellbarkeit, mechanische Festigkeit u.dgl. Es hat sich gezeigt, daß bezüglich der bisher bekannten Siliconpolymere aufgrund der Verschiedenheit des organischen Radikals keine grundsätzliche Unterscheidung bezüglich der Brauchbarkeit als Basismaterial für die Zwecke dieser Erfindung gemacht werden muß. Weiters hat sich gezeigt, daß auch Füllstoffe, die technischen Siliconpolymeren oft zugegeben werden, keinen wesentlichen Einfluß auf die Eigenschaften der entstehenden ionensensitiven Elektroden hatten. Als Füllstoffe sind beispielsweise Zinkoxyd, Bleioxyd, Titandioxyd oder Kieselgel bekannt.

Bezüglich der Quellung des Siliconpolymers sind einige Randbedingungen zu nennen, die das Ergebnis günstig beeinflussen, welche allerdings nicht als notwendige Voraussetzung angesehen werden können. Dazu gehört die Reversibilität der Quellung; das bedeutet, daß die beim Lösungsmittelkontakt beobachtete Volumszunahme nach dem Verdunsten des Lösungsmittels zumindest größtenteils wieder zurückgeht. Weiters hat es sich als günstig erwiesen, wenn das Lösungsmittel das zur Quellung führt und die elektroaktive Komponente enthält, einen ausreichend hohen Dampfdruck aufweist, um eine Verflüchtigung des Lösungsmittels bei solchen Temperaturen zu ermöglichen, die die elektroaktive Komponente nicht zerstören und dazu führen, daß diese Verflüchtigung des Lösungsmittels in einer sinnvollen Zeit erfolgt. Eine weitere, weitgehend triviale Voraussetzung ist die, daß die elektroaktive Komponente und allfällige Zusatzkomponenten im Lösungsmittel lösbar sein müssen.

Es hat sich herausgestellt, daß starke Quellungen durch eine Reihe von verschiedensten organischen Lösungsmitteln auftreten. In der folgenden Tabelle sind einige vorteilhafte verwendbare Lösungsmittel, deren Siedepunkt und der
erzielte Quellungsgrad an einem Siliconpolymer als Beispiel aufgelistet.

| Lösungsmittel | Siedepunkt ($^{\circ}$C) | Quellung (Ø Vergrößerung in % nach 60 sec.) |
|---|---|---|
| THF | 64 | 38 |
| Acetaldehyd | 20,2 | 15 |
| Aceton | 56 | 7 |
| Ethanol | 78 | 7 |
| Methanol | 64,7 | 4 |
| Ethylazetat | 77 | 13 |
| Benzol | 80 | 38 |
| Toluol | 110,8 | 38 |
| Trichlorethylen | 86,9 | 29 |
| Petroleumbenzin | 59-70 | 54 |
| Tetrachlorkohlenstoff | 76,7 | 46 |
| Methylethylketon | 79,6 | 23 |

Diese Lösungsmittel sind, ohne Einschränkung auf diese, vorteilhaft kombinierbar mit Siliconpolymeren aus der Gruppe:
Polydimethylsiloxan, Polymethylphenylsiloxan, Polydimethylhydrosiloxan, Polymethyloctadecylsiloxan, Polymethyldecyl
Diphenylsiloxan Copolymer, oder Gemischen derselben, sowie
mit an sich jeder für ionensensitive Elektroden bekannten
elektroaktiven Komponente. Diese sind in der einschlägigen Fachliteratur ausführlich angegeben. In diesem Zusammenhang wird z.B. auf die Veröffentlichung von Karl
Cammann: "Das Arbeiten mit ionenselektiven Elektroden"
2. Aufl., Springer Verlag Berlin, 1977 und auf das Buch
von Jiří Koryta: "Medical and biological applications of
elektrochemical devices" John Wiley-Verlag New York, 1980,
verwiesen. Insbesondere kommen im Rahmen der vorliegenden
Erfindung elektroaktive Komponenten aus der Gruppe der natürlichen neutralen und geladenen Ionencarrier, wie beispielsweise Valinomycin, Nonactin, Nigericin und verwandte
Verbindungen, in Betracht, wie ebenso die in der obgenannten Literatur eingehend besprochenen synthetischen neutralen Ionencarrier, die insbesondere für die selektive Messung von Calcium, Natrium, Lithium, Magnesium mit ionenselektiven Elektroden bekannt geworden sind. Darüber hinaus ist besonders die Verwendung von Ionenaustauschermaterialien, wie beispielsweise quaternäre Ammoniumsalze, wie etwa Methyltridotecylammoniumchlorid für chloridsensitive Elektroden oder Bis [di(p-1,1,3,3-tetramethylbutylphenyl)phospat] für calciumsensitive Elektroden zu erwähnen. Damit ist die Aufzählung der möglichen elektroaktiven Komponenten aber keineswegs vollständig. Die einschlägige Literatur beschreibt beispielsweise Kronenätherverbindungen als ebenfalls neutrale Liganden für Kationen und weitere sterisch gebaute Molekülspezies, wie beispielsweise die sogenannten Hemisphäranden, welche etwa auch in einer Schrift von Schindler: Bioelektrochemische Membranelektroden, W.de Gruyter Berlin, 1983; angeführt und diskutiert sind.

Nach einem weiteren Vorschlag der Erfindung ist vorgesehen, zur elektroaktiven Komponente in dem speziell verwendeten Siliconpolymer noch weitere Zusatzstoffe anzuwenden und diese ebenso wie die elektroaktive Komponente aus einer Lösung in die durch das Lösungsmittel gequollene Struktur des Siliconpolymers einzubringen. Derartige Zusatzstoffe sind beispielsweise: Kaliumtetrakisparachlorophenylborat oder Natriumtetraphenylborat und analoge Verbindungen, sowie lipophile Ester organischer Säuren wie beispielsweise die Dialkylester der Phtalsäure, Sebacinsäure, Adipinsäure und andere, welche auch bei den bekannten auf PVC-Matrices basierenden ionensensitiven Elektrodenmembranen als sogenannte Weichmacher angewandt werden. Von diesen Verbindungen ist es bekannt, daß sie die Selektivität der elektroaktiven Komponente in günstiger Weise beeinflussen.

Ein weiterer Vorteil der vorliegenden Erfindung besteht in der einfachen Regenerierbarkeit der ionensensitiven Elektroden, die mit Hilfe des erfindungsgemäßen Verfahrens hergestellt sind. Durch Diffusionsvorgänge innerhalb der Membranen erfolgt ein steter Stofftransport der elektroaktiven und sonstigen Membrankomponenten an die Membranoberfläche, wo diese Substanzen zu einem gewissen, meist geringen Ausmaß durch die Probe oder Reinigungslösungen zum Entfernen der Probenrückstände, entfernt werden. Dieses "Auswaschen" der elektroaktiven Komponente verringert die Gebrauchslebensdauer der ionensensitiven Elektroden. Im Gegensatz zu den bekannten ionensensitiven Elektroden auf PVC-Basis ist bei der erfindungsgemäßen Membranart eine Regenerierung der Elektrodenmembran auf sehr einfache Weise dadurch möglich, daß das Siliconpolymer entsprechend dem ursprünglichen Herstellungsvorgang mit einer Lösung der elektroaktiven und sonstigen Membrankomponenten in einem das Siliconpolymer quellenden Lösungsmittel in Kontakt gebracht wird. Dadurch nimmt das Siliconpolymer die elektroaktive Komponente erneut auf und ist wiederum funktionsfähig. Dieser Vorgang ist in vorteilhafter Weise zu wiederholten Malen durchführbar.

Ein weiterer Vorteil der vorliegenden Erfindung liegt darin, daß insbesondere bei der Herstellung von Durchflußelektroden und der Verwendung eines Siliconschlauchs zu deren Herstellung die Wand des Probenkanals der Elektrode völlig homogen ist und dadurch einerseits optimale Strömungsbedingungen vorliegen und andererseits keinerlei Inhomogenitäten zur Ablagerung von unerwünschten Rückständen der Probe führen können.

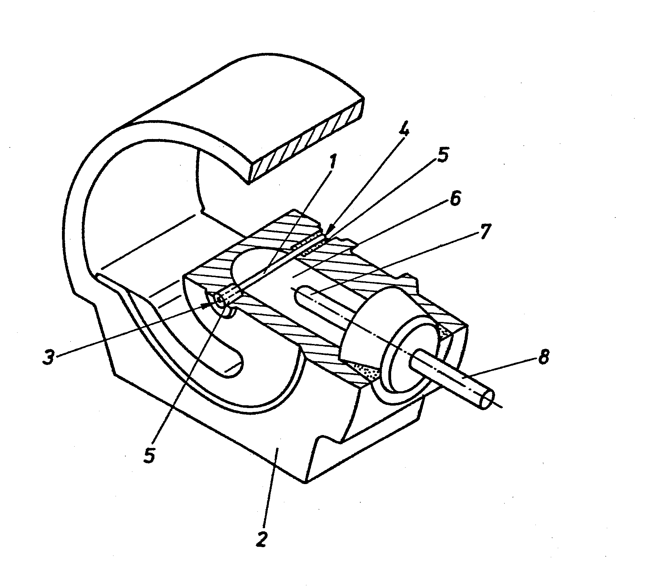

Das erfindungsgemäße Verfahren soll nun noch an einem Beispiel näher beschrieben werden; wobei die fertige Membranelektrode teilweise im Schnitt in der Zeichnung dargestellt ist:

Eine kaliumsensitive Durchflußelektrode wird dadurch erzeugt, daß ein Stück Siliconschlauch 1 (Firma Detakta) mit einer lichten Weite von 0,7 mm und einer Wandstärke von 0,2 mm in einen Elektrodenkörper 2 (könnte auch beispielsweise gemäß der AT-PS 363 263 ausgeführt sein) an seinen beiden Enden 3, 4 so eingeklebt wird, wie dies die Zeichnung darstellt; der Bereich des Klebstoffs ist mit 5 bezeichnet. Sodann wird in den lichten Innenraum des Siliconschlauches 1 eine Lösung von 1 mg Valinomycin in 100 $\mu$l Tetrahydrofuran eingespritzt und die Verdunstung des Lö- sungsmittels abgewartet, die innerhalb von ca. 5 Minuten erfolgt. Dieser Vorgang wird im allgemeinen z.B. dreimal durchgeführt, um eine möglichst hohe Beladungsdichte des Siliconmaterials mit der elektroaktiven Komponente Valinomycin zu erzielen. Nach einer Trockenzeit von ca. zwei Stunden wird der Innenraum 6 des Elektrodenkörpers 2 mit einer kaliumchloridhältigen Lösung gefüllt und mit einer Silber-Silber-Chlorid-Elektrode 7, die einen Stecker 8 aufweist, versehen. Nach dieser Behandlung ist die Elektrode einsatzfähig und zeigt in allen ihren Eigenschaften mindestens vergleichbare Charakteristika mit kaliumsensitiven Elektroden, die auf PVC-Basis basieren und vermeidet die eingangs genannten Nachteile derselben. Diese kaliumsensitive Elektrode könnte aber auch z.B. so hergestellt werden, daß der Siliconschlauch 1 zunächst in einer Lösung von Valinomycin in dem quellenden Lösungsmittel eingelegt, dieses zum Verdunsten gebracht und der auf diese Art und Weise aktivierte Siliconschlauch 1 in das Elektrodengehäuse 2 eingeklebt wird.

In ähnlicher Weise können mit anderen der genannten elektroaktiven Komponenten, z.B. ionensensitive Elektroden mit Natriumsensitivität, Chloridempfindlichkeit, Kalziumempfindlichkeit oder pH-Empfindlichkeit, hergestellt werden.

84 09 12
Pi/Fr

Patentansprüche

1. Verfahren zur Herstellung einer eine elektroaktive Komponente enthaltenden Siliconpolymer-Membran zur Verwendung in einer ionensensitiven Membranelektrode zur Messung der Ionenkonzentration in einer Probe, d a d u r c h   g e k e n n z e i c h n e t,   daß eine Lösung der elektroaktiven Komponente in einem zu einer Quellung des polymerisierten Siliconpolymers führenden Lösungsmittel mit der in auspolymerisierter Form vorliegenden Siliconpolymer-Membran in Kontakt gebracht wird und daß anschließend das Lösungsmittel verdunstet wird.

2. Verfahren nach Anspruch 1, gekennzeichnet durch die Verwendung eines organischen Lösungsmittels, bzw. eines Gemisches von derartigen Lösungsmitteln, für die Quellung des Siliconpolymers.

3. Verfahren nach Anspruch 1, gekennzeichnet durch die kombinierte Verwendung eines Siliconpolymers aus der Gruppe: Polydimethylsiloxan, Polymethylphenylsiloxan, Polydimethylhydrosiloxan, Polyethylhydrosiloxan, Polymethyloctadecylsiloxan, Polymethyldecyl Diphenylsiloxan Copolymer, oder Gemischen derselben; einer elektroaktiven Komponente aus der Gruppe der natürlichen neutralen und geladenen Ionencarrier, wie beispielsweise Valinomycin, Nonactin, Nigericin und verwandte Verbindungen, sowie der synthetischen neutralen Ionencarrier bzw. der Ionenaustauschermaterialien, und eines Lösungsmittels aus der Gruppe: THF, Acetaldehyd, Aceton, Ethanol, Methanol, Ethylazetat, Benzol, Toluol, Trichlorethylen, Petroleumbenzin, Tetrachlorkohlenstoff, Methylethylketon.

4. Verfahren nach einem der Ansprüche 1 bis 3, dadurch gekennzeichnet, daß vor der Behandlung der Siliconpolymer-Membran zu der Lösung der elektroaktiven Komponente im Lösungsmittel weitere Substanzen, wie insbesonders Kaliumtetrakisparachlorophenylborat oder Natriumtetraphenylborat und analoge Verbindungen, sowie Weichmacher in Form lipophiler Ester organischer Säuren wie
beispielsweise die Dialkylester der Phthalsäure,
Sebacinsäure, Adipinsäure zugegeben werden.

5. Verfahren zur Regenerierung der elektroaktiven Eigenschaften einer nach einem der Ansprüche 1 bis 4 hergestellten Siliconpolymer-Membran, dadurch gekennzeichnet, daß die Membrane entsprechend dem ursprünglichen
Herstellungsvorgang mit einer Lösung der elektroaktiven und sonstigen Membrankomponenten in einem das
Siliconpolymer quellenden Lösungsmittel in Kontakt gebracht wird.

6. Ionensensitive Durchfluß-Membranelektrode mit einer
nach einem der Ansprüche 1 bis 4 hergestellten Siliconpolymer-Membran, dadurch gekennzeichnet, daß die
Membran als Siliconschlauch (1) ausgebildet ist, der
an seinen Enden (3, 4) in einem Elektrodenkörper (2)
eingeklebt ist und an seiner freien Außenoberfläche
mit einem in einem Innenraum (6) des Elektrodenkörpers
(2) vorgesehenen Elektrolyten, der seinerseits mit
einer Ableitelektrode (7) in Verbindung steht, in
Kontakt ist.

84 09 12
Pi/Fr

Europäisches
Patentamt

EUROPÄISCHER RECHERCHENBERICHT

0148150
Nummer der Anmeldung

EP 84 89 0181

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | DE-A-2 711 270 (IMPERIAL CHEMICAL IND. LTD.)<br><br>* Seite 7, Zeile 16 - Seite 9, Zeile 30 *<br><br>--- | 1,2 | G 01 N 27/30 |
| A | EP-A-0 068 505 (TOKYO SHIBAURA DENKI K.K.)<br><br>* Seite 5, Zeile 5 - Seite 7, Zeile 24 *<br><br>--- | 1-5 | |
| A | US-A-4 314 895 (F. SPAZIANI et al.)<br><br>* Spalte 1, Zeile 42 - Spalte 2, Zeile 49 *<br><br>--- | 1-3,6 | |
| A | GB-A-1 593 270 (ST.THOMAS'S HOSPITAL MEDICAL SCHOOL)<br><br>* Seite 2, Zeile 60 - Seite 3, Zeile 20 *<br><br>--- | 1-4 | RECHERCHIERTE SACHGEBIETE (Int. Cl.4)<br><br>G 01 N 27/00 |
| A | US-A-3 767 553 (J. BROWN et al.)<br><br>* Spalte 2, Zeilen 9-49 *<br><br>----- | 2 | |

Der vorliegende Recherchenbericht wurde für alle Patentansprüche erstellt.

| Recherchenort | Abschlußdatum der Recherche | Prüfer |
|---|---|---|
| DEN HAAG | 18-02-1985 | BINDON C. |

KATEGORIE DER GENANNTEN DOKUMENTEN
X : von besonderer Bedeutung allein betrachtet
Y : von besonderer Bedeutung in Verbindung mit einer
     anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder
     nach dem Anmeldedatum veröffentlicht worden ist
D : in der Anmeldung angeführtes Dokument
L : aus andern Gründen angeführtes Dokument

& : Mitglied der gleichen Patentfamilie, überein-
     stimmendes Dokument

EPA Form 1503. 03 82